# EUROPÄISCHE PATENTANMELDUNG

(11) **EP 1 505 542 A2**
(43) Veröffentlichungstag der Anmeldung: **09.02.2005**
(21) Anmeldenummer: 04017539.0
(22) Anmeldetag: 23.07.2004
(51) Int. Cl.: G06T 7/00

(54) **Verfahren und Anordnung zum Erkennen der Position eines Objektes**

(30) Priorität: 29.07.2003 DE 10334640
(71) Anmelder: SIEMENS AKTIENGESELLSCHAFT, 80333 München (DE)
(72) Erfinder: Müller, Peter, 75045 Walzbachtal-Wössingen (DE)

(57) **Zusammenfassung**

Es wird ein Verfahren und eine Anordnung zum Erkennen der Position eines auf einem Objektträger angeordneten Objektes in einem Bildaufnahmebereich durch Auswertung von Bildinformationen einer Bildaufnahmevorrichtung vorgeschlagen. Es sind Maßnahmen vorgesehen, wodurch die Position des zu prüfenden Objekts im Bildaufnahmebereich automatisch erkannt wird, es sind weder die Bildinformationen eines Referenzobjektes noch die Bildinformationen von Referenzdaten der beweglichen oder stationären Teile des Hintergrundes erforderlich.

## Beschreibung

Die Erfindung betrifft ein Verfahren zum Erkennen der Position eines auf einem Objektträger angeordneten Objektes in einem Bildaufnahmebereich durch Auswertung von Bildinformationen einer Bildaufnahmevorrichtung gemäß dem Oberbegriff des Anspruchs 1. Ferner betrifft die Erfindung eine Anordnung mit einer Bildaufnahmevorrichtung und einer Auswerteeinheit zur Durchführung des Verfahrens.

Die optische Suche, Lagebestimmung, Klassifikation und Prüfung von Objekten sind in der Automatisierungstechnik, insbesondere in der industriellen Bildauswertung, häufig wiederkehrende Aufgaben. Unter Klassifikation versteht man in diesem Zusammenhang, eine Entscheidung zu treffen, ob es sich bei einem in einem Bildausschnitt aufgenommenen Objekt um ein bestimmtes Objekt handelt oder nicht.

Diese Klassifikation erfolgt meist durch Vergleich der Objektbilddaten mit den Bilddaten eines zuvor aufgenommenen Referenzobjektes. Im Rahmen der Prüfung eines Objekts wird beispielsweise die Maßhaltigkeit oder Vollständigkeit des zu prüfenden Objekts im Vergleich zu dem Referenzobjekt ermittelt und überwacht, ob zulässige Maximalabweichungen nicht überschritten werden.
Nachteilig bei einer derartigen Klassifikation ist, dass sowohl die Bildinformationen des Referenzobjekts als auch die Bildinformationen des Hintergrunds, insbesondere die Bildinformationen eines Objektträgers, bekannt sein müssen, um die Position des Objektes in einem Bildaufnahmebereich zu erkennen.

Der vorliegenden Erfindung liegt die Aufgabe zugrunde, ein Verfahren der eingangs genannten Art zu vereinfachen. Darüber hinaus ist eine zur Durchführung des Verfahrens geeignete Anordnung anzugeben.

Im Hinblick auf das Verfahren wird diese Aufgabe durch die im kennzeichnenden Teil des Anspruchs 1 angegebenen, im Hinblick auf die Anordnung durch die im Anspruch 3 angegebenen Maßnahmen gelöst.

Vorteilhaft ist, dass zum Erkennen der Position des zu prüfenden Objekts weder die Bildinformationen eines Referenzobjektes noch die Bildinformationen von Referenzdaten der beweglichen oder stationären Teile des Hintergrundes erforderlich sind. Eine Parametrierung und eine genaue Positionierung des Objektes im Bildaufnahmebereich werden nicht benötigt, wodurch ferner eine visuelle Kontrolle durch einen Anwender entfällt. Die Position des Objekts wird automatisch ermittelt. Es ist lediglich erforderlich, dass der Anwender zwei Bildaufnahmen vornimmt. Es sind aufzuzeichnen das Hintergrundbild, welches die Bildinformationen des Objektträgers und der stationären Teile umfasst, und ferner ein Objektbild, das sowohl die Bildinformation des Objekts als auch des Objektträgers und der stationären Teile umfasst, wobei gewöhnlich die Position des Objektträgers im Objektbild von der Position des Objektträgers im Hintergrundbild abweicht.

In einer Ausgestaltung der Erfindung gemäß der im Anspruch 2 angegebenen Maßnahmen ist es möglich, die Größe des Objekts automatisch zu ermitteln.

Anhand der Zeichnung, in der Ausführungsbeispiele der Erfindung veranschaulicht sind, werden im Folgenden die Erfindung, deren Ausgestaltungen sowie Vorteile näher erläutert.

Es zeigen in schematischer Darstellung:
- Figur 1: ein Hintergrundbild mit einem Objektträger,
- Figur 2: ein Objektbild mit dem Objektträger und einem Objekt,
- Figur 3: ein Differenzbild,
- Figur 4: eine Bildregion des Objektträgers,
- Figuren 5 und 6: ein Muster der Bildregion nach Figur 4 im Hintergrund- und Objektbild,
- Figuren 7 und 8: das Objekt nach Figur 2.

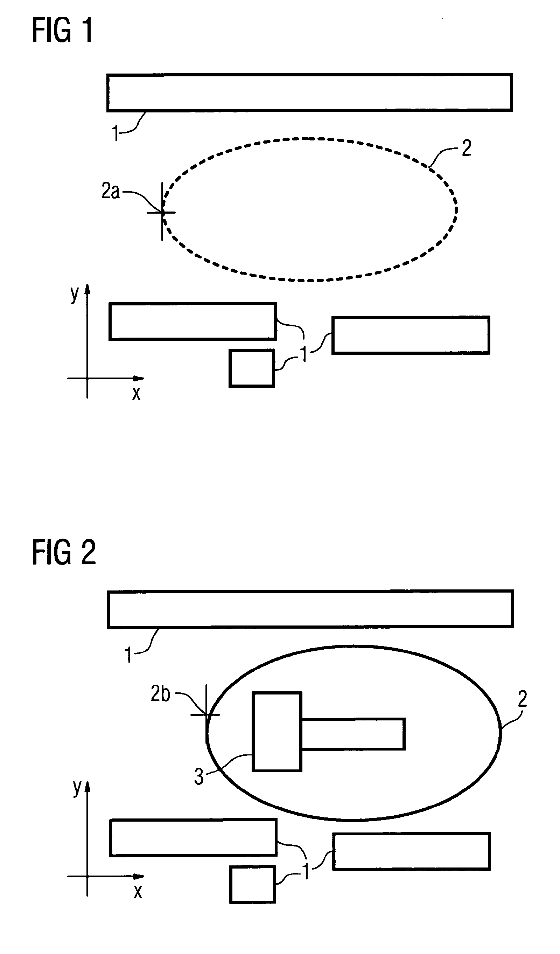

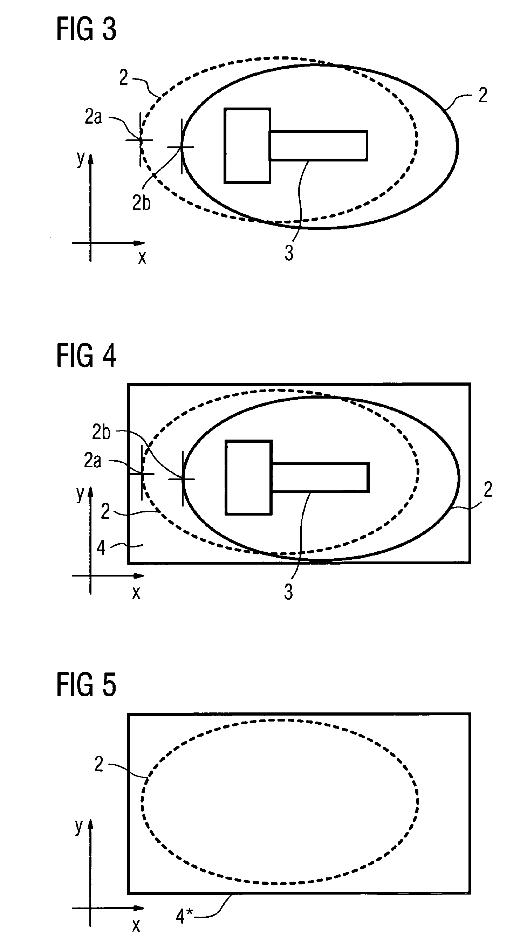

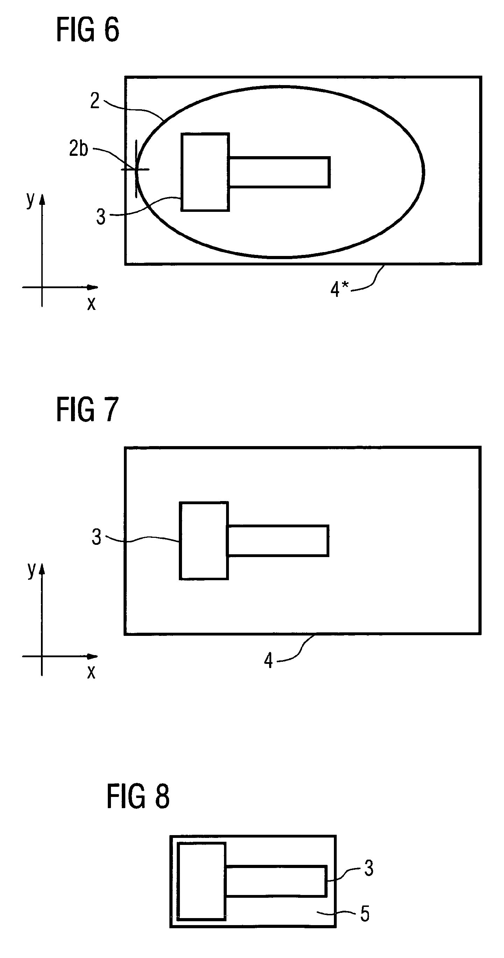

Im Folgenden wird Bezug genommen auf Figur 1 und 2. Dort sind mit 1 stationäre Teile eines Hintergrund- und eines Objektbildes bezeichnet, welche Bestandteile einer Objektprüfeinrichtung sein können. Das Hintergrund- und das Objektbild sind durch eine Bildaufnahmevorrichtung aufgezeichnet, die zusammen mit einer Auswerteeinheit Bestandteil dieser Objektprüfeinrichtung ist. Das Hintergrundbild (Figur 1) zeigt ferner einen Objektträger 2, dessen Position 2a innerhalb eines Bildaufnahmebereiches verschieden ist von einer Position 2b des Objektträgers 2 im Objektbild (Figur 2), was z. B. durch eine ungenaue Positionierung des Objektträgers 2 in der Prüfeinrichtung durch einen Anwender bewirkt wird. Auf dem Objektträger 2 ist ein Objekt 3 (Figur 2) angeordnet, dessen Position und Größe innerhalb des Bildaufnahmebereiches zu bestimmen sind.
In einem ersten Auswerteschritt erzeugt die Auswerteeinheit ein Differenzbild (Figur 3) aus dem Objektbild (Figur 2) und dem Hintergrundbild (Figur 1), wodurch die stationären Teile 1 eliminiert werden und auf dem Differenzbild lediglich der Objektträger 2 in der Position 2a und der Objektträger 2 zusammen mit dem Objekt 3 in der Position 2b erkennbar sind. In einem nächsten Auswerteschritt (Figur 4) bestimmt die Auswerteeinheit eine Bildregion 4 des "bewegten Hintergrundes". Dazu wird um den Objektträger 2 in der Position 2a und um den Objektträger 2 zusammen mit dem Objekt 3 in der Position 2b (Figur 3) ein Rahmen gelegt, wobei in einem weiteren Auswerteschritt die Auswerteeinheit (Figur 5) diese Bildregion 4 des "bewegten Hintergrundes" als Muster 4* aus dem Hintergrundbild (Figur 1) einlernt. Dieses "gelernte" Muster 4* und damit die Position 2b findet die Auswerteeinheit im Objektbild (Figur 2), was in der Figur 6 dargestellt ist. Die Ermittlung der Position ist somit abgeschlossen und es sind weitere Auswerteschritte zur Ermittlung der Größe des Objektes 3 durchführbar. Dazu wird in einem weiteren Schritt die Differenz aus dem "eingelernten" Muster (Figur 6) und dem Objektbild (Figur 2) an der gefundenen Position 2b gebildet, wodurch das Objekt 3 in der Bildregion 4 erkennbar ist (Figur 7). Die Auswerteeinheit ermittelt in einem folgenden Schritt einen Objekt-Bildregionausschnitt 5 (Figur 8) aus der gebildeten Differenz (Figur 7), wobei der Objekt-Bildregionausschnitt 5 das Objekt 3 umfasst und die Größe des Objekts repräsentiert. Dieser Objekt-Bildregionausschnitt ist für eine detaillierte Objekterkennung einem geeigneten Erkennungsalgorithmus übermittelbar.

## Patentansprüche

1. Verfahren zum Erkennen der Position eines auf einem Objektträger (2) angeordneten Objektes (3) in einem Bildaufnahmebereich durch Auswertung von Bildinformationen einer Bildaufnahmevorrichtung, **gekennzeichnet durch** folgende Verfahrensschritte:
a) Aufnehmen eines Hintergrundbildes, welches Bildinformationen des Objektträgers (2) in einer ersten Position (2a) umfasst,
b) Aufnehmen eines Objektbildes, welches Bildinformationen des Objektträgers (2) mit dem Objekt (3) in einer zweiten Position (2b) umfasst,
c) Erzeugen eines Differenzbildes aus dem Objektbild und dem Hintergrundbild,
d) Bestimmen einer Objektträger-Bildregion (4) aus dem Differenzbild, wobei diese Bildregion (4) den Objektträger (2) in der ersten Position (2a) und den Objektträger (2) mit dem Objekt (3) in der zweiten Position (2b) umfasst,
e) Einlernen dieser Bildregion (4) als Muster, wobei sich das Muster **durch** Vergleich dieses Musters mit dem Hintergrundbild ergibt, und
f) Ermitteln der Position (2b) des eingelernten Musters im Objektbild.

2. Verfahren nach Anspruch 1, **gekennzeichnet durch** die Verfahrensschritte:
- Bilden der Differenz aus Objektbild und eingelerntem Muster an der ermittelten Position (2b) und
- Ermitteln eines Objekt-Bildregionausschnitts (5) aus der gebildeten Differenz, wobei der Objekt-Bildregionausschnitt das Objekt (3) umfasst.

3. Anordnung zur Durchführung des Verfahrens nach Anspruch 1 oder 2, mit
- einer Bildaufnahmevorrichtung, durch welche ein Hintergrund- und ein Objektbild aufnehmbar ist, wobei das Hintergrundbild Bildinformationen des Objektträgers (2) in einer ersten Position (2a) umfasst und das Objektbild Bildinformationen des Objektträgers (2) mit dem Objekt (3) in einer zweiten Position (2b) umfasst,
- einer Auswerteeinheit, welche
- aus den Bildinformationen des Objektbildes und des Hintergrundbildes ein Differenzbild erzeugt,
- aus den Bildinformationen des Differenzbildes eine Objektträger-Bildregion (4) bestimmt, wobei diese Bildregion (4) Bildinformationen des Objektträgers (2) in der ersten Position (2a) und des Objektträgers (2) mit dem Objekt (3) in der zweiten Position (2b) umfasst,
- diese Bildregion (4) als Muster einlernt, wobei sich das Muster durch Vergleich dieses Musters mit dem Hintergrundbild ergibt, und
- die Position (2b) des eingelernten Musters im Objektbild ermittelt.

4. Anordnung nach Anspruch 3, wobei die Auswerteeinheit die Differenz aus Objektbild und eingelerntem Muster an der ermittelten Position (2b) bildet und einen Objekt-Bildregionausschnitt (5) aus der gebildeten Differenz ermittelt, wobei der Objekt-Bildregionausschnitt (5) das Objekt (3) umfasst.
